Europäisches Patentamt

European Patent Office

Office européen des brevets

(19)

(11) Numéro de publication: **0 086 921**

**A1**

(12)

# DEMANDE DE BREVET EUROPEEN

(21) Numéro de dépôt: 82400308.1

(22) Date de dépôt: 22.02.82

(51) Int. Cl.³: **B 01 D 59/34**

(43) Date de publication de la demande:
31.08.83 Bulletin 83/35

(84) Etats contractants désignés:
BE IT NL

(71) Demandeur: COMMISSARIAT A L'ENERGIE ATOMIQUE Etablissement de Caractère Scientifique Technique et Industriel
31/33, rue de la Fédération
F-75015 Paris(FR)

(72) Inventeur: Cahan, Josselyne épouse de Montlans de Villardi
c/o la Dret, Groupe 4 26 , Boulevard Victor
F-75706 Paris(FR)

(72) Inventeur: Clerc, Michel
20, rue Ronsard
F-91470 Limours(FR)

(74) Mandataire: Mongrédien, André et al,
c/o BREVATOME 25, rue de Ponthieu
F-75008 Paris(FR)

(54) Procédé optique d'excitation sélective d'une variété isotopique d'un corps, dispositif de mise en oeuvre et application à la séparation isotopique.

(57) Procédé optique d'excitation sélective des molécules d'une variété isotopique d'un corps contenue dans un mélange d'autres variétés isotopiques.

On choisit parmi les états d'excitation moléculaire vibrationnelle que peut présenter ledit corps, un état actif en Raman dont l'énergie $E_v$ par rapport à l'état fondamental dépend de la masse de la molécule; on détermine cette énergie $E_v$ pour la variété isotopique à exciter; on expose le mélange de variétés isotopiques aux rayonnements de deux faisceaux lumineux monochromatiques et colinéaires de fréquences respectivement $F_1$ et $F_2$, lesdites fréquences vérifiant la relation $h(F_1-F_2) = E_v$, où $h$ est la constante de Planck.

Application à la séparation isotopique.

FIG. 3

La présente invention a pour objet un procédé optique d'excitation sélective d'une variété isotopique d'un corps, un dispositif de mise en oeuvre et une application à la séparation isotopique.

Parmi les procédés connus d'excitation sélective d'une variété isotopique d'un corps, à l'aide d'un rayonnement optique, le plus simple est sans doute celui qui consiste à exposer ledit corps à un rayonnement dont l'énergie hF ($\underline{h}$ désignant la constante de Planck et F la fréquence du rayonnement) coïncide avec une bande d'absorption de l'atome ou de la molécule, cette coïncidence n'apparaissant que pour la seule variété isotopique considérée. Une partie de ladite variété se trouve portée sur un état excité, lequel peut être éventuellement un état électroniquement excité, si le corps est sous forme atomique, mais qui est le plus souvent un état vibrationnellement excité, lorsque le corps est sous forme moléculaire.

Ce procédé est utilisé en particulier pour l'hexafluorure de soufre $SF_6$, dont la bande dite $\nu_3$ coïncide avec les raies dites $P_{12}$ et $P_{20}$ du laser à anhydride carbonique.

On trouvera une description de ce procédé de l'art antérieur par exemple dans l'article de V.S. LETHOKOV et al, publié dans la revue "Soviet Journal Quantum Electronics", volume 6, 259, (1976), ou dans l'article de J.L. LYMAN et al, publié dans la revue "Applied Physics Letters", volume 27, 87 (1975).

Les niveaux de vibration mis en jeu dans un tel procédé sont les niveaux associés à l'état fondamental de la molécule. Leur énergie est donc faible et les rayonnements excitateurs se situent nécessairement dans l'infrarouge lointain. S'il se trouve que certaines raies du laser à $CO_2$ coïncident heureusement avec une bande de $SF_6$, il n'en est pas toujours de même avec d'autres corps et c'est ainsi que l'on recherche

B. 6175.3 RS

en vain une source lumineuse puissante qui émettrait vers 16µm, longueur d'onde de la bande d'absorption $\nu_3$ de $UF_6$ active en infrarouge. Le procédé est donc d'application limitée.

La présente invention permet justement d'éviter cette difficulté en proposant un procédé qui utilise deux rayonnements au lieu d'un seul, ces deux rayonnements ayant des fréquences différentes, la condition permettant l'excitation sélective ne portant plus sur les fréquences proprement dites, mais sur leur différence, ce qui est beaucoup moins contraignant. Selon l'invention, pour faire passer une molécule de son état fondamental à l'un de ses états de vibration actif en Raman, d'énergie $E_v$, on l'excite par l'ensemble de deux rayonnements de fréquences $F_1$ et $F_2$, ces fréquences étant liées par l'égalité $hF_1 - hF_2 = E_v$. Pour que cette excitation présente un caractère sélectif et n'affecte qu'un des isotopes présents il faut, comme dans l'art antérieur, que l'état de vibration ait une énergie qui dépende de la masse de la molécule. En d'autres termes, la bande correspondant à cet état doit être affectée d'un déplacement spectral isotopique.

Le mécanisme intime du processus mis en oeuvre dans le procédé de la présente invention, qui fait appel à la "Diffusion Raman Stimulée Induite", est certes plus complexe que celui de l'art antérieur, qui ne faisait appel qu'à une simple absorption. Mais, sur le plan pratique, l'invention apporte une simplification considérable notamment dans la recherche des sources lumineuses adaptées à une telle application. En effet, il est beaucoup plus facile de trouver deux sources (en pratique des lasers) dont la différence de fréquences d'émission correspond à une valeur déterminée, que de mettre au point un laser unique dont la fréquence est égale à ladite valeur. On sait en effet qu'il existe des lasers "à colorant" (dits encore "dye-lasers")

B. 6175.3 RS

3          0086921

capables d'émettre un faisceau lumineux dont la fréquence peut être accordée dans une très large plage (pratiquement de l'ultraviolet au proche infrarouge) soit par changement du colorant, soit par utilisation dans la cavité d'un système dispersif du genre réseau de diffraction ou prisme. On connaît par ailleurs des lasers à solide émettant dans le visible des puissances considérables, le plus connu étant le laser à rubis. Selon l'invention, il suffit de combiner deux de ces lasers et d'accorder la fréquence du laser à colorant à la valeur $F_2 = F_1 - E_v/h$. Il n'est donc plus nécessaire de faire appel à un laser émettant dans l'infrarouge à la fréquence active en infrarouge $E_v/h$, ce qui poserait, dans certains cas, des problèmes considérables, voire insolubles. Le procédé de l'invention est donc d'application pratique beaucoup plus large que le procédé de l'art antérieur et il peut être ainsi appliqué à toute une famille de corps répondant à la formule $MF_6$ où M est le symbole d'un élément appartenant au groupe qui comprend S, Se, Te, Mo, W et U. En particulier, le procédé de la présente invention s'applique sans difficulté à l'excitation sélective de l'hexafluorure d'uranium sur différentes bandes actives en Raman, notamment la bande de 812 $cm^{-1}$ correspondant à l'état $\nu_3 + \nu_4$.

Un autre avantage de l'invention, lié à l'utilisation du mécanisme de "Diffusion Raman Stimulée Induite", tient à ce qu'il devient possible d'exciter des milieux de faible densité, telle qu'on en trouve dans les jets moléculaires ou dans les détentes de refroidissement. De telles détentes sont quelquefois nécessaires pour diminuer l'importance des bandes dites chaudes, qui se superposent aux spectres et masquent les déplacements isotopiques.

De façon plus précise, la présente invention a pour objet un procédé optique d'excitation sélective des molécules d'une variété isotopique d'un corps contenue dans un mélange d'autres variétés isotopiques

B. 6175.3 RS

4

0086921

dudit corps, caractérisé en ce que :

- on choisit, parmi les états d'excitation moléculaire vibrationnelle actifs en Raman que peut présenter ledit corps, un état dont l'énergie $E_v$ par rapport à l'état fondamental dépende de la masse de la molécule,

- on détermine cette énergie $E_v$ pour la variété isotopique à exciter,

- on expose le mélange de variétés isotopiques aux rayonnements de deux faisceaux lumineux monochromatiques et colinéaires de fréquences respectivement $F_1$ et $F_2$, lesdites fréquences vérifiant la relation $h(F_1 - F_2) = E_v$, où $\underline{h}$ est la constante de Planck.

De préférence, on choisit, selon l'invention, un état qui résulte de la combinaison de deux modes de vibration moléculaire différents, l'un au moins des deux modes, et de préférence les deux, étant affecté d'un déplacement isotopique.

Dans le cas des molécules de type $MF_6$, on choisit en particulier l'état correspondant à la bande de combinaison dite $(v_3 + v_4)$, c'est-à-dire l'état qui résulte de la combinaison de deux états correspondant l'un à la bande $v_3$, l'autre à la bande $v_4$ de $MF_6$. L'intérêt de ce choix réside en ce que les bandes $v_3$ et $v_4$ sont toutes deux affectées d'un déplacement spectral isotopique, de sorte que la bande $(v_3 + v_4)$ cumule lesdits déplacements, ce qui est de nature à améliorer la sélectivité.

L'invention a également pour objet un dispositif pour la mise en oeuvre du procédé qui vient d'être défini. Il est caractérisé en ce qu'il comprend :

- une cuve contenant un mélange de variétés isotopiques d'un corps, ledit corps présentant des états d'excitation moléculaire vibrationnelle dont l'un au moins est affecté d'un déplacement isotopique, l'énergie de cet état, par rapport à l'état fondamental, étant égale à $E_v$ pour l'une des variétés isotopiques,

- deux sources lumineuses émettant des rayonnements monochromatiques respectivement de fréquences $F_1$ et $F_2$, lesdites fréquences vérifiant la relation $h(F_1 - F_2) = E_v$,

- des moyens optiques pour rendre colinéaires les deux rayonnements émis par les sources et pour diriger ces rayonnements colinéaires dans ladite cuve.

Bien que le procédé de l'invention et son dispositif de mise en oeuvre puissent trouver des applications dans divers domaines de la physique et notamment en spectroscopie, c'est en séparation isotopique qu'ils trouvent leur domaine privilégié d'application. Il suffit en effet, pour obtenir une telle séparation, de faire suivre l'opération d'excitation sélective selon l'invention d'une opération apte à discriminer les molécules sur le critère de leur excitation vibrationnelle. Cela peut se faire par tout moyen connu, notamment par photodissociation, si le mélange est exposé à un rayonnement optique apte à porter les seules molécules excitées dans un état de dissociation, ou par réaction chimique, si ladite réaction est choisie de telle sorte que son énergie d'activation soit voisine de l'énergie d'excitation des seules molécules.

De toute façon, les caractéristiques et avantages de la présente invention apparaîtront mieux après la description qui suit, d'exemples de réalisation donnés à titre explicatif et nullement limitatif, en référence aux dessins annexés sur lesquels :

- la figure 1 est un schéma illustrant le mécanisme de la diffusion Raman ;

- la figure 2 est un schéma illustrant le mécanisme de la diffusion Raman stimulée induite ;

- la figure 3 est un schéma illustrant le mécanisme d'excitation sélective selon l'invention ;

- la figure 4 représente le schéma d'un dispositif d'excitation sélective selon l'invention ;

B. 6175.3 RS

- la figure 5 représente un spectre obtenu avec un mélange de deux variétés isotopiques d'hexafluorure de soufre ;

- la figure 6 représente schématiquement une installation de séparation isotopique selon l'invention ;

- la figure 7 représente un mode particulier de réalisation de cette installation ;

- la figure 8 illustre un mécanisme d'escalade pouvant conduire à une dissociation.

On observera soigneusement, tout d'abord, que le procédé de l'invention ne consiste pas à combiner non linéairement deux rayonnements de fréquences $F_1$ et $F_2$ afin d'engendrer au préalable un rayonnement de fréquence $F_1 - F_2$, coïncidant avec la quantité $E_v/h$, puis à exposer le mélange d'isotopes audit rayonnement de fréquence $F_1 - F_2$, afin d'exciter celui des isotopes qui possède une bande d'absorption à la fréquence $E_v/h$. Un tel procédé serait concevable mais il présenterait peu d'intérêt car son rendement serait extrêmement faible. On sait, en effet, que la conversion des deux rayonnements de fréquences $F_1$ et $F_2$ en un rayonnement de fréquence $F_1 - F_2$ nécessite l'utilisation d'un cristal non linéaire et que le taux de conversion obtenu est extrêmement faible et inférieur au pourcent.

Au contraire, dans l'invention, la combinaison des rayonnements de fréquences $F_1$ et $F_2$ s'effectue au sein même de la molécule excitée, par le jeu d'un mécanisme très particulier qui est la "Diffusion Raman Stimulée Induite", la conversion obtenue étant alors beaucoup plus importante puisqu'elle peut atteindre environ 50 %.

Pour mieux comprendre cet aspect important de l'invention, il n'est pas inutile de rappeler quelques notions sur l'effet Raman et notamment sur ce qu'on entend par "Diffusion Raman Stimulée Induite".

7

0086921

On sait que la répartition angulaire d'un rayonnement lumineux est modifiée à la traversée de la matière, ce qui donne naissance à un rayonnement diffusé. Ce rayonnement possède en général la même fréquence que le rayonnement incident. Il s'agit alors du phénomène de diffusion Rayleigh. Mais dans certains cas, une partie du rayonnement incident est diffusée sur un certain nombre de fréquences discrètes, les unes plus basses, les autres plus élevées que celles du rayonnement incident. Les premières sont dites "raies Stokes" et les secondes "raies anti-Stokes". L'apparition de ce spectre de raies dans le rayonnement diffusé constitue l'effet Raman.

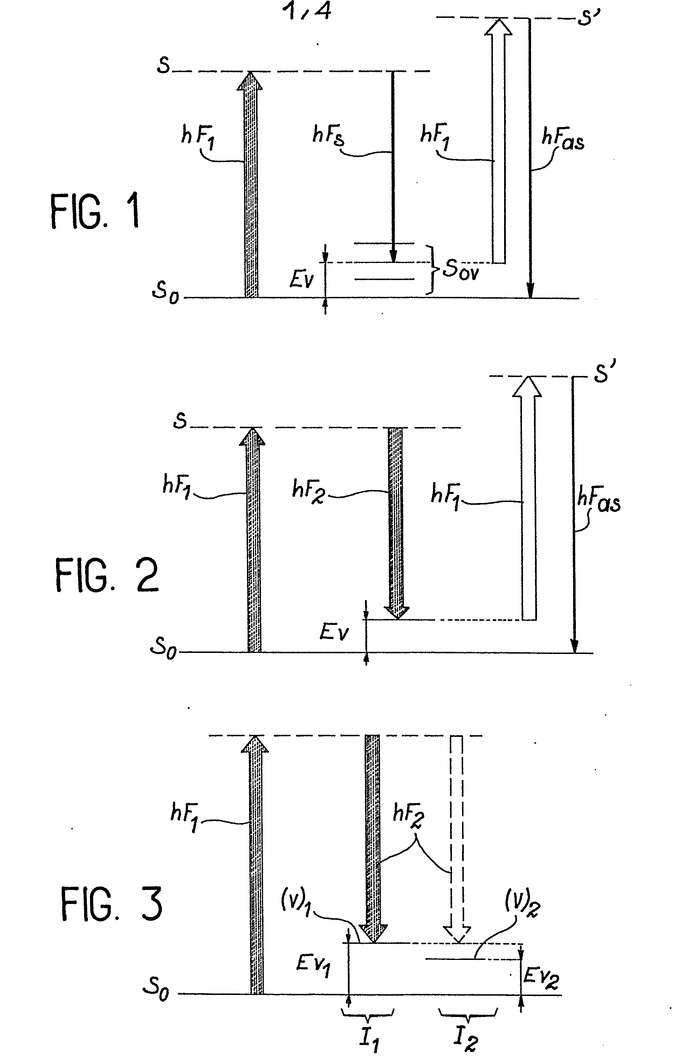

Un modèle explicatif simplifié de ce phénomène peut être donné à l'aide du schéma de la figure 1. Sur ce schéma sont portés quelques niveaux d'énergie d'une molécule : un niveau $S_0$ correspondant à l'état fondamental de la molécule et des niveaux de vibration $S_{0v}$ associé audit état fondamental. Lors du processus de diffusion Raman, la molécule subit une double transition, la première qui l'amène de l'état fondamental $S_0$ à un état supérieur S, par absorption d'un photon d'énergie $hF_1$, et la seconde, qui la fait quitter l'état S et la conduit sur l'un des états de vibration $S_{0v}$. On notera que l'état S n'est en général pas stationnaire (comme dans le mécanisme de fluorescence par exemple, où l'état supérieur est un état électroniquement excité), de sorte que le passage par S est en quelque sorte virtuel.

Le photon réémis par la molécule possède une énergie $hF_s$ où la fréquence $F_s$ est au plus égale à la fréquence $F_1$, l'égalité ayant lieu lorsque la molécule retourne directement de S à l'état fondamental $S_0$. L'écart entre l'énergie $hF_1$ du photon incident et l'énergie $hF_s$ du photon diffusé représente l'énergie $E_v$ du

B. 6175.3 RS

niveau de vibration auquel aboutit la transition. La raie correspondant à l'énergie $hF_s$ est donc une raie Stokes puisqu'on a $hF_s < hF_1$.

Si le photon incident rencontre une molécule qui est déjà dans un état de vibration, la molécule est portée dans un état supérieur S' d'où elle peut éventuellement retourner directement à l'état fondamental $S_0$. Dans ce cas, l'énergie $hF_{as}$ du photon diffusé l'emporte sur l'énergie $hF_1$ du photon incident et l'on obtient une raie anti-Stokes. Ce processus apparaît symboliquement sur la partie droite de la figure 1.

L'ensemble des raies Stokes et anti-Stokes constitue le spectre Raman du matériau. Chaque raie est en réalité une bande car chaque niveau de vibration de la molécule est associé à une famille de niveaux de rotation, plus ou moins résolus et qui donne aux transitions une largeur non nulle.

Lorsque la densité du rayonnement devient importante, un phénomène de stimulation apparaît qui renforce l'émission des raies Raman. Ce phénomène apparaît principalement pour celles des transitions Stokes qui possèdent la plus forte section efficace Raman. Par exemple, dans le cas d'une molécule de type $MF_6$, cette transition privilégiée est celle qui aboutit à l'état de vibration $\nu_1$.

Si l'on veut obtenir une transition stimulée autre que celle qui aurait tendance à s'établir naturellement (par exemple dans le cas d'une molécule $MF_6$, une transition $(\nu_3 + \nu_4)$ différente de la transition $\nu_1$), il est nécessaire d'"induire" cette transition au moyen d'un second rayonnement incident dont la fréquence doit correspondre à ladite transition recherchée.

Sur la figure 2 sont représentées schématiquement les transitions mises en jeu : la première, qui correspond à une absorption d'un photon d'énergie $hF_1$,

et la seconde, qui correspond à une émission stimulée induite d'un photon d'énergie $hF_2$. La molécule se retrouve dans l'état vibrationnel distant de $E_v$ de l'état fondamental. Ce processus à deux photons constitue la "Diffusion Raman Stimulée Induite". Il est fondamentalement lié à la condition de résonance $hF_1 - hF_2 = E_v$. Il conduit à des conversions très importantes d'énergie incidente en énergie diffusée.

Accessoirement, on notera que si la molécule absorbe le photon incident alors qu'elle est déjà dans un état de vibration et si elle se désexcite ensuite directement sur l'état fondamental (cas qui est illustré sur la partie droite de la figure 2), on obtiendra une raie anti-Stokes. L'intérêt de ce processus est de permettre une mesure de la population de l'état de vibration puisque l'intensité de la raie anti-Stokes correspondant à cet état dépend directement du nombre de molécules qui sont dans cet état.

Ce phénomène de "Diffusion Raman Stimulée Induite" est connu en soi et a fait l'objet de travaux théoriques et expérimentaux. On pourra consulter à ce sujet l'article de P. REGNIER et al. publié dans la revue "Applied Physics Letters", volume 23, 240, 1973. L'invention consiste en une application particulière de ce phénomène à l'excitation sélective d'une variété isotopique d'un corps.

Ces points préliminaires étant exposés, le procédé de l'invention schématisé par la figure 3, consiste en ceci. Tout d'abord, on choisit, pour le corps considéré, un état vibrationnel $\underline{v}$ dont l'énergie dépend de la masse de la molécule. Ce choix ne pose aucun problème pour l'homme de l'art puisque nombre d'ouvrages donnent toutes les caractéristiques des différents modes de vibration de la plupart des molécules simples. L'ouvrage de HERZBERG G. intitulé "Infrared and Raman Spectra of Polyatomic Molecules" édité chez Van Nostrand, en est un exemple.

L'énergie de cet état, comptée par rapport à l'état fondamental, est $(E_v)_1$ pour un isotope $I_1$ et $(E_v)_2$ pour un second isotope $I_2$. En d'autres termes, la bande $\nu$, caractéristique de l'état $\underline{v}$, est affectée d'un déplacement spectral isotopique. Toutes les bandes ne présentent pas ce déplacement. Il en est qui sont liées à des modes de vibration de la molécule totalement symétriques et qui, de ce fait, ne dépendent pas de la masse de l'atome central. C'est le cas notamment de la bande $\nu_1$ des molécules de type $MF_6$. En revanche, les bandes $\nu_3$ et $\nu_4$ actives séparément en infrarouge des molécules de ce type sont affectées chacune d'un déplacement spectral. La bande de combinaison $(\nu_3 + \nu_4)$ active en Raman cumule ces deux déplacements et constitue, de ce fait, une bande privilégiée dans cette application.

L'état de vibration étant choisi pour satisfaire à cette première condition, on détermine ensuite l'énergie $E_v$ de la bande active en Raman correspondante, ce qui ne pose aucun problème pour l'homme de l'art, soit qu'elle figure déjà dans les tables des ouvrages spécialisés, soit qu'on la mesure par spectroscopie Raman.

L'énergie $E_v$ étant connue, on choisit enfin deux sources lumineuses, de préférence des lasers, dont les fréquences respectives $F_1$ et $F_2$ des rayonnements sont telles que $h(F_1 - F_2)$ soit égal à $E_v$.

Cette condition de résonance étant remplie pour le seul isotope $I_1$, son excitation est assurée, à l'exclusion des autres isotopes. Il y a donc bien excitation sélective de la variété isotopique $I_1$.

Une théorie plus fine du phénomène de "Diffusion Raman Stimulée Induite" montre que les vecteurs d'onde correspondant aux rayonnements incidents de fréquences $F_1$ et $F_2$ doivent être sensiblement colinéaires. Sur le plan expérimental, cela signifie que les faisceaux

B. 6175.3 RS

lumineux dirigés sur le mélange isotopique doivent être rendus eux aussi sensiblement colinéaires.

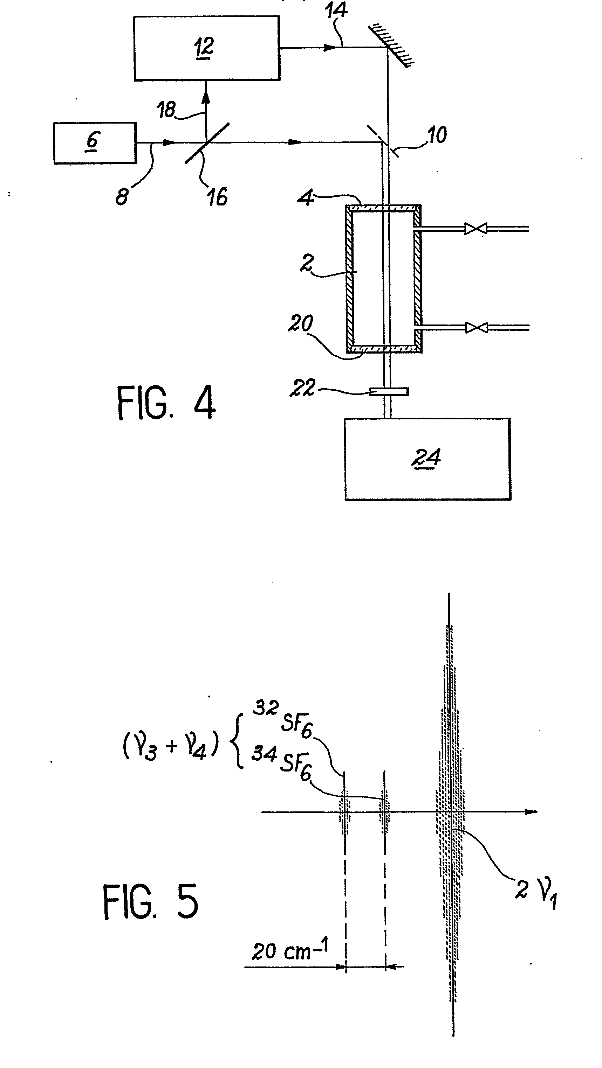

Le dispositif de mise en oeuvre du procédé de l'invention, est illustré schématiquement sur la figure 4. Le mélange isotopique est contenu dans une cuve 2 dont au moins une face 4 est transparente. Un premier laser 6 émet un faisceau lumineux 8 dirigé dans la cuve au moyen d'un miroir 10. Un second laser 12 émet un faisceau lumineux 14 dirigé lui aussi dans la cuve, à travers le miroir 10. Celui-ci doit donc être di-chroïque. Le laser 6 est par exemple un laser à rubis, émettant des impulsions de lumière à 6943 $\overset{o}{A}$ et le laser 12 un laser à colorant, de longueur d'onde réglable par des moyens non représentés mais connus. Il fonctionne lui aussi en impulsions. Il peut être avantageux de prélever une partie du faisceau 8 pour pomper optique-ment le laser à colorant 12. A cette fin, un miroir semitransparent 16 est disposé sur le trajet du faisceau 8. Il donne naissance à un faisceau 18 dirigé sur le laser 12. Eventuellement la cuve 2 est munie d'une seconde fenêtre transparente 20 et associée à un filtre atténuateur 22 et à un spectrographe 24. Ce spectrographe permet de relever le spectre Raman du matériau et de déterminer en particulier l'intensité de la raie anti-Stokes correspondant à l'état vibrationnel excité. Une telle mesure permet de contrôler le réglage de la fréquence du laser à colorant.

L'installation illustrée sur la figure 4 a été utilisée avec succès par le demandeur dans les conditions suivantes : le laser 6 était un laser à rubis émettant des impulsions de puissance crête 2,5 GW, de durée 2ns, à une fréquence fixe correspondant à 14403 cm$^{-1}$ ; la moitié de la puissance émise, soit 1,2 GW, servait à pomper un laser à colorant accordable utilisant le colorant DOTCI. Ce second laser délivrait des

B. 6175.3 RS

impulsions de puissance crête 0,5 GW, de durée 2 ns ;
la largeur spectrale était inférieure à 0,8 $cm^{-1}$ et la
bande émise était réglable dans une plage de largeur
300 $cm^{-1}$ centrée sur 12833 $cm^{-1}$. La cuve était un tube
de 1m remplie de $SF_6$ à une pression réglable comprise
entre 0 et 22 bars. A la sortie de la cuve, les longueurs
d'onde excitatrices étaient filtrées et seule l'émission
anti-Stokes atteignait le spectrographe 24 qui était
du type CZERNY-TURNER de pouvoir dispersif 20 000.

Des mesures ont été effectuées par le demandeur avec cet appareillage, pour la bande de combinaison
$(\nu_3 + \nu_4)$ de $SF_6$ qui est active en Raman et qui cumule
les déplacements isotopiques propres aux bandes $\nu_3$ et $\nu_4$
(respectivement 17 $cm^{-1}$ et 2,8 $cm^{-1}$). Mais d'autres
bandes actives en Raman pourraient être utilisées,
comme $(\nu_3 + \nu_6)$ ou $(\nu_4 + \nu_6)$. L'hexafluorure de soufre
utilisé contenait la proportion naturelle de 4,4 % de
$^{34}SF_6$ et de 95 % de $^{32}SF_6$, l'isotope 33 n'étant présent
qu'en quantité négligeable. Les déplacements Stokes et
anti-Stokes mesurés pour la bande $(\nu_3 + \nu_4)$ de l'isotope 32 ont été trouvés égaux à 1570 $cm^{-1}$ ($\pm$ 1 $cm^{-1}$),
ce qui correspond à la différence des deux nombres
d'ondes des rayonnements émis par les deux lasers
(14403 - 12833 = 1570). La bande anti-Stokes $(\nu_3 + \nu_4)$
se présente sous la forme d'un doublet de largeur 20 $cm^{-1}$.
La composante de ce doublet situé du côté des courtes
longueurs d'onde correspond à l'isotope $^{34}SF_6$, qui est
le moins abondant, l'autre composante correspondant à
$^{32}SF_6$. Ce doublet est voisin du second harmonique de
la bande anti-Stokes correspondant à la vibration
totalement symétrique $2\nu_1$. La disposition relative de
ces différentes bandes est représentée schématiquement
sur la figure 5, d'après les mesures effectuées par
le demandeur.

La quasi coïncidence entre $(\nu_3 + \nu_4)$ et $2\nu_1$
ne se reproduit pas pour $UF_6$ où $2\nu_1 = 1334$ $cm^{-1}$ et
$\nu_3 + \nu_4 = 812$ $cm^{-1}$, ce qui est une situation plus favorable.

B. 6175.3 RS

Le fait que l'un des lasers soit accordable permet d'effectuer des mesures autour de la résonance. Pour cela, il suffit de faire varier la fréquence $F_2$ du laser à colorant par rotation de son réseau de diffraction. On constate alors que la bande anti-Stokes voit son intensité décroître de part et d'autre d'un maximum obtenu lorsque la condition $h(F_1 - F_2) = E(\nu_3 + \nu_4)$ est satisfaite. Comme cette intensité est directement fonction de la population du niveau $\nu_3 + \nu_4$ (comme exposé à propos de la partie droite de la figure 2), on vérifie bien que l'excitation sélective est maximale à la résonance.

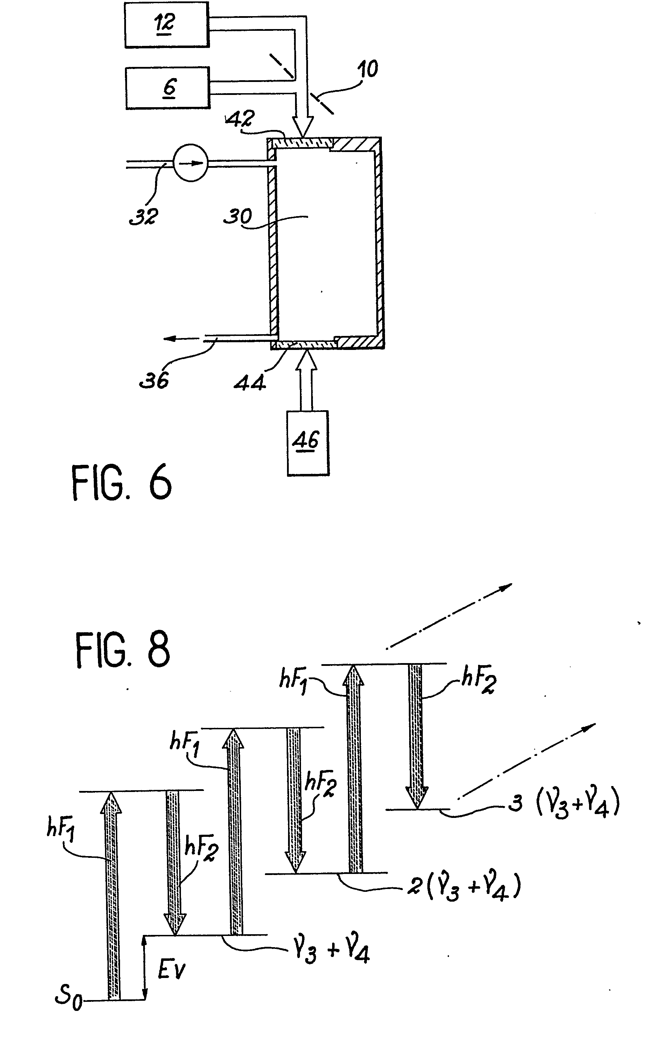

Lorsque le procédé d'excitation sélective est utilisé comme première étape d'un procédé de séparation isotopique, il est nécessaire de prévoir, dans le dispositif de mise en oeuvre, des moyens aptes à effectuer une discrimination des molécules basée sur le critère de l'excitation vibrationnelle. Ces moyens peuvent être de tout type connu ; ils peuvent notamment consister en des moyens de photodissociation comme il est représenté sur la figure 6.

Sur cette figure, on retrouve les moyens optiques déjà illustrés sur la figure 4, à savoir les deux lasers 6 et 12 et le miroir dichroïque 10. En outre, est représentée une cuve 30 de séparation isotopique, alimentée en un mélange de variétés isotopiques par un conduit d'arrivée 32 et reliée à un conduit de sortie 36 débouchant dans la cuve. Celle-ci comprend deux fenêtres transparentes 42 et 44. La première sert à la traversée des rayonnements d'excitation sélective produits par les lasers 6 et 12. La seconde permet l'introduction d'un troisième rayonnement émis par un troisième laser 46, dont le rôle est de dissocier les molécules déjà portées à l'état de vibration d'énergie $E_v$. L'énergie $E_p$ des photons de ce troisième rayonnement

B. 6175.3 RS

doit être telle que $E_v + E_p \geqslant E_d$, désigne l'énergie de dissociation, et telle aussi que $E_p < E_d$, afin que les molécules non excitées ne puissent se dissocier. Cette double condition peut être obtenue facilement avec les lasers à colorants accordables.

Une telle installation trouve une application privilégiée dans la séparation des isotopes $^{235}U$ et $^{238}U$ de l'uranium employés sous forme d'hexafluorure par exemple.

Dans ce cas, le mélange gazeux extrait par la conduite 36 est constitué d'$UF_6$ appauvri en isotope $U_{235}$ et de produits volatils de dissociation, tandis que sur les parois de la cuve se dépose une phase solide enrichie en $U_{235}$ qui peut être facilement récupérée.

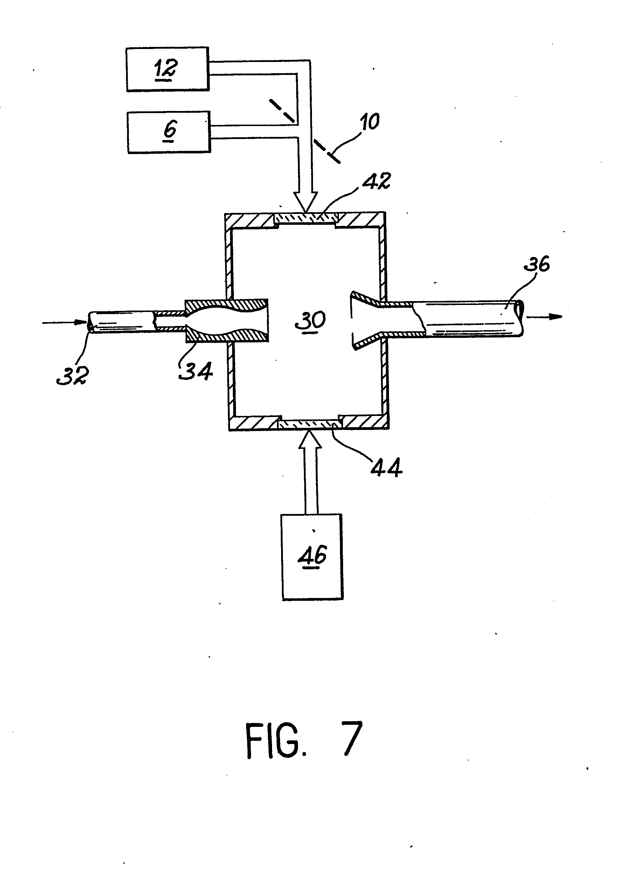

Pour diminuer l'importance des bandes dites chaudes, il est possible de travailler dans un milieu de basse densité obtenu par un jet moléculaire ; le mélange initial est alors comprimé puis détendu au travers d'une tuyère 34 placée dans l'axe du conduit de pompage 36 comme illustré sur la figure 7.

Eventuellement, le gaz circulant dans la conduite 36 peut être réintroduit dans le dispositif de séparation pour un nouvel enrichissement.

En tant que moyen pour effectuer la discrimination des molécules sélectivement excitées, on pourrait aussi envisager par exemple une réaction chimique ayant une énergie d'activation voisine de l'énergie $E_v$.

Dans certains cas, et notamment si les lasers d'excitation de fréquence $F_1$ et $F_2$ sont très puissants, on peut assiter à un phénomène d'escalade conduisant, à lui seul, à une photodissociation, ce qui dispense d'avoir à utiliser des moyens auxiliaires dans ce but. Ce mécanisme d'escalade est représenté schématiquement sur la figure 8.

0086921

Le niveau $(\nu_3 + \nu_4)$ peut se trouver saturé par une excitation photonique intense. Il sert alors de niveau de départ pour un nouveau processus de Diffusion Raman Stimulée Induite, qui porte la molécule sur un nouvel état excité $2(\nu_3 + \nu_4)$, à partir duquel un nouveau processus d'excitation peut se développer, et ainsi de suite. La molécule peut alors atteindre le continuum de dissociation.

Ce processus se trouve limité par des mécanismes de conversion interne, au cours desquels une vibration de combinaison de type $n(\nu_3 + \nu_4)$ se transforme en différentes combinaisons linéaires de vibrations simples et par des mécanismes faisant intervenir l'anharmonicité des vibrations, anharmonicité qui croît avec le rang $\underline{n}$.

L'émission anti-Stokes apparaît comme un phénomène parasite qu'il convient de minimiser. Cependant, l'émission anti-Stokes reste toujours très inférieure ($10^{-3}$) à l'émission Stokes et n'affecte donc pas sensiblement le procédé.

B. 6175.3 RS

REVENDICATIONS

1.Procédé optique d'excitation sélective des molécules d'une variété isotopique d'un corps contenue dans un mélange d'autres variétés isotopiques dudit corps, caractérisé en ce que :

- on choisit, parmi les états d'excitation moléculaire vibrationnelle que peut présenter ledit corps, un état actif en Raman dont l'énergie $E_v$ par rapport à l'état fondamental dépende de la masse de la molécule,

- on détermine cette énergie $E_v$ pour la variété isotopique à exciter,

- on expose le mélange de variétés isotopiques aux rayonnements de deux faisceaux lumineux monochromatiques et colinéaires de fréquences respectivement $F_1$ et $F_2$, lesdites fréquences vérifiant la relation $h(F_1 - F_2) = E_v$, où $\underline{h}$ est la constante de Planck.

2. Procédé selon la revendication 1, caractérisé en ce qu'on engendre un premier faisceau lumineux à l'aide d'un premier laser de fréquence $F_1$ fixe et en ce qu'on engendre un second faisceau lumineux à l'aide d'un second laser de fréquence $F_2$ réglable, la fréquence $F_2$ étant ajustée à la valeur $F_2 = F_1 - E_v/h$.

3. Procédé selon l'une quelconque des revendications 1 et 2, caractérisé en ce que ledit corps est un composé d'uranium.

4. Procédé selon la revendication 3, caractérisé en ce que ledit composé est l'hexafluorure d'uranium.

5. Procédé selon la revendication 1, caractérisé en ce que ledit corps répond à la formule $MF_6$ où M appartient au groupe qui comprend S, Se, Te, Mo, W.

6. Procédé selon l'une quelconque des revendications 4 et 5, caractérisé en ce qu'on choisit un état qui est un état de combinaison actif en Raman entre deux états de vibration moléculaire différents, l'un au moins de deux états, et de préférence les deux étant affecté d'un déplacement isotopique.

B. 6175.3 RS

17 0086921

7. Procédé selon la revendication 6, caractérisé en ce que ledit état de combinaison est l'état $(\nu_3 + \nu_4)$.

8. Dispositif pour la mise en oeuvre du procédé selon l'une quelconque des revendications 1 à 7, caractérisé en ce qu'il comprend :

- une cuve contenant un mélange de variétés isotopiques d'un corps, ledit corps présentant des états d'excitation moléculaire vibrationnelle dont l'un au moins est affecté d'un déplacement isotopique, l'énergie de cet état, par rapport à l'état fondamental étant égale à $E_v$ pour l'une des variétés isotopiques,

- deux sources lumineuses émettant des rayonnements monochromatiques respectivement aux fréquences $F_1$ et $F_2$ vérifiant la relation $h(F_1 - F_2) = E_v$,

- des moyens optiques pour rendre colinéaires les deux rayonnements émis par les sources et pour diriger ces rayonnements colinéaires dans ladite cuve.

9. Dispositif selon la revendication 8, caractérisé en ce que les sources lumineuses sont des lasers.

10. Dispositif selon la revendication 9, caractérisé en ce que l'un des lasers est un laser à solide, notamment à rubis, et l'autre un laser à colorant accordable, pompé par une partie du rayonnement émis par le laser à solide.

11. Application du procédé selon l'une quelconque des revendications 1 à 7, à la séparation isotopique, caractérisée en ce qu'elle consiste à faire suivre l'opération d'excitation sélective d'une des variétés isotopiques, d'une opération de séparation entre les molécules vibrationnellement excitées et les molécules non excitées.

12. Application selon la revendication 11, caractérisée en ce que ladite opération de séparation est une photodissociation qui consiste à exposer le

B. 6175.3 RS

mélange à un rayonnement optique apte à porter les seules molécules excitées vibrationnellement dans un état dissociatif.

13. Application selon la revendication 12, caractérisée en ce que ladite opération de séparation consiste en une réaction chimique ayant une énergie d'activation voisine de l'énergie $E_v$.

14. Application selon l'une quelconque des revendications 11 à 13 à la séparation des isotopes de l'uranium.

1,4

$S'$

$S$

$hF_1$    $hF_S$    $hF_1$    $hF_{as}$

FIG. 1

$Ev$    $S_{ov}$

$S_0$

$S'$

$S$

$hF_1$    $hF_2$    $hF_1$    $hF_{as}$

FIG. 2

$Ev$

$S_0$

$hF_1$    $hF_2$    $(v)_2$

FIG. 3

$(v)_1$

$Ev_1$    $Ev_2$

$S_0$

$I_1$    $I_2$

FIG. 4

$(\nu_3 + \nu_4) \begin{cases} ^{32}SF_6 \\ ^{34}SF_6 \end{cases}$

$2\nu_1$

$20\ cm^{-1}$

FIG. 5

0086921

FIG. 6

FIG. 8

FIG. 7

Office européen
des brevets

**RAPPORT DE RECHERCHE EUROPEENNE**

**0086921**
Numéro de la demande

EP 82 40 0308.1

| Catégorie | Citation du document avec indication, en cas de besoin, des parties pertinentes | Revendication concernée | CLASSEMENT DE LA DEMANDE (Int. Cl. ³) |
|---|---|---|---|
| | **DOCUMENTS CONSIDERES COMME PERTINENTS** | | |
| X | DD - A - 134 918 (VEB C. ZEISS JENA) <br> * revendications 1, 2; page 2, ligne 28 à page 3, ligne 17; exemple; fig. 1, 2 * <br> -- | 1,8, 10-13 | B 01 D 59/34 |
| X | IBM TECHNICAL DISCLOSURE BULLETIN Vol. 17, No. 11, avril 1975, New York R.T. HODGSON et al. "Isotope Separation Using Laser Light" pages 3501 à 3502 * document complet * <br> -- | 1,3,4, 8-14 | |
| A | DE - A1 - 2 617 043 (EXXON RESEARCH AND ENGINEERING CO.) & FR - A - 2 308 400 <br> ---- | | **DOMAINES TECHNIQUES RECHERCHES (Int. Cl. ³)** <br><br> B 01 D 59/00 |

**CATEGORIE DES DOCUMENTS CITES**

X: particulièrement pertinent à lui seul
Y: particulièrement pertinent en combinaison avec un autre document de la même catégorie
A: arrière-plan technologique
O: divulgation non-écrite
P: document intercalaire
T: théorie ou principe à la base de l'invention
E: document de brevet antérieur, mais publié à la date de dépôt ou après cette date
D: cité dans la demande
L: cité pour d'autres raisons

&: membre de la même famille, document correspondant

X Le présent rapport de recherche a été établi pour toutes les revendications

| Lieu de la recherche | Date d'achèvement de la recherche | Examinateur |
|---|---|---|
| Berlin | 30-08-1982 | BERTRAM |

OEB Form 1503.1  06.78